## Europäisches Patentamt

## European Patent Office

## Office européen des brevets

(11) Publication number: **0 085 124**
**B1**

# EUROPEAN PATENT SPECIFICATION

(45) Date of publication of patent specification: 04.11.87

(51) Int. Cl.⁴: **B 07 C 5/36**

(21) Application number: 82100663.2

(22) Date of filing: 30.01.82

(54) Screw inspection device.

(43) Date of publication of application:
10.08.83 Bulletin 83/32

(45) Publication of the grant of the patent:
04.11.87 Bulletin 87/45

(84) Designated Contracting States:
DE FR GB

(56) References cited:
GB-A- 583 072
GB-A-1 604 842
US-A-3 042 200
US-A-3 386 575
US-A-3 816 746
US-A-3 983 388
US-A-4 011 435
MACHINERY, vol. 99, no. 2559, 29th November 1961, pages 1245-1252, Burgess Hill (GB); G. HALEY et al.: "Special machine for sorting screws".
THE RADIO AND ELECTRONIC ENGINEER, vol. 27, no. 5, May 1964, pages 337-348, London (GB); J.A. SARGROVE: "Automatic high-speed measuring systems for complex products and shapes".

(73) Proprietor: NHK SPRING CO., Ltd.
1 Shinisogo-cho, Isogo-ku
Yokohama-shi (JP)

(72) Inventor: Kato, Michio
2-8-9, Sakuragaoka
Yokosuka-shi Kanagawa-ken (JP)
Inventor: Takahashi, Hayao
11-1-206, Green-heights 568 Tsukui
Yokosuka-shi Kanagawa-ken (JP)
Inventor: Hoshino, Hidekazu
2-18-10, Wada Hodogaya-ku
Yokohama-shi (JP)
Inventor: Furuyama, Tsutomu
1-16-6-404, Namiki Kanazawa-ku
Yokohama-shi (JP)
Inventor: Inagaki, Kenichi
4-5, Hirochi-machi Isogo-ku
Yokohama-shi (JP)

(74) Representative: Lewald, Dietrich, Dipl.-Ing.
Patentanwälte Müller-Boré, Deufel, Schön,
Hertel Lewald, Otto Isartorplatz 6 Postfach 26 02 47
D-8000 München 26 (DE)

## Description

The invention relates to a screw inspection device having:

a parts feeder which supplies a screw with its shank kept down;

a transfer means having a pair of side walls arranged substantially parallel to each other to define a groove along which the screw supplied from said parts feeder is transferred with its shank kept down;

the height of said walls is formed to be greater than the length of the shank of the screw;

a plurality of gauging means arranged along subsequent transfer paths which perform sorting for specific dimensions of the screw.

Such a screw inspection device is shown in Machinery, 99 (1961.11.29), 2559, 1245 t/m 1252 by Haley "Special Machine for Sorting Screws". Such a machine has subsequent stations for mechanically ejecting screws, when their shaft is too long, for having a screws path through a channel, provided their head was equal to the given dimension or less and for sorting screws as to the dimension of the head after having been transferred by vibration.

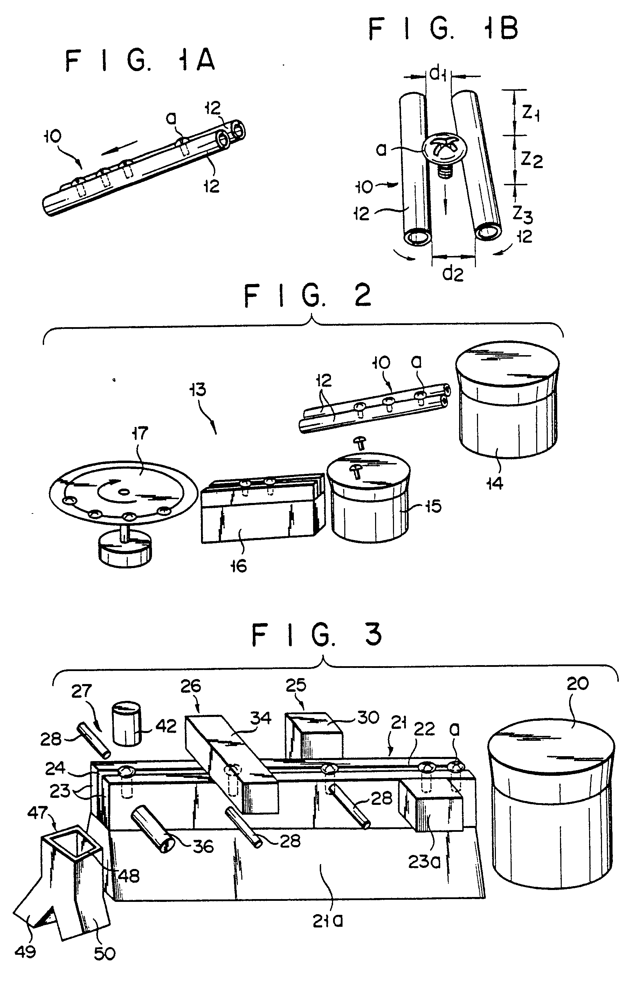

With the development of automatic assembly devices, automatic screw fasteners have been recently used widely. When an automatic screw fastener is fed with defective screws, the automatic screw fastener is rendered inoperative. Therefore, the operation of the screw fastener must be temporarily stopped to remove the defective screws or to perform other repair operations. This adversely affects the related manufacturing line and causes a tremendous damage. In order to avoid the above problem, various inspection devices are incorporated into the automatic screw fastener. A roller type sorter 10 which is employed in a conventional screw inspection device is shown in Figs. 1A and 1B. The roller type sorter 10 transfers a screw a and sorts in accordance with the diameter of the screw head. Figs. 1A and 1B show the basic members for explaining the structure and function of the roller type sorter. As shown in these figures, the roller type sorter 10 has two rollers 12 of the same shape. The two rollers 12 are disposed so that extended lines of their axes cross with each other. The ends which are close to the crossing point of the extended lines are disposed lower than the ends which are away from the crossing point. A gap between the ends of the rollers 12 which are close to the crossing point, is narrower than that between the other ends thereof. In particular, symbol d1 denotes the gap between the upper ends and symbol d2 denotes the gap between the lower ends, in which gap d1 is narrower than gap d2. The two rollers 12 rotate so that opposing surfaces of the rollers 12 move upward, that is, the rollers 12 rotate in opposite directions. Gaps d1 and d2 and the length of the rollers 12 are selected in accordance with the diameter of the screw head to be inspected. When the screw a is fed to and supported by the circumferential faces of the upper ends of the rollers 12, the head of the screw a is supported by the rollers 12 while the screw a is transferred to the lower ends thereof. When a screw whose head diameter is smaller than the tolerance is transferred from the upper ends, this screw drops from an upper zone Z1 between the rollers 12 while being transferred. When a screw whose head diameter is within the tolerance is transferred, this screw drops from an intermediate zone Z2 between the rollers 12. Further, when a screw whose head diameter is larger than the tolerance, the screw drops from a lower zone Z3 between the rollers 12. In this manner, the screws a are classified into three types: the screws whose head diameter is smaller than, within, and larger than the predetermined tolerance. As apparent from the above description, this roller type sorter 10 is a device for inspecting the head size of the screws a with simple construction and easy handling.

Fig. 2 shows a conventional screw inspection device which is capable of performing various inspections on the screw, incorporating other sensors (not shown) and including the roller type sorter 10. The screw inspection device 13 of Fig. 2 comprises the roller type sorter 10, a first parts feeder 14 which feeds the screw a to the roller type sorter 10, a second parts feeder 15 which stacks the screw a the head of which has a diameter within the tolerance and which is dropped from the intermediate zone Z2, a linear feeder 16 which is disposed in the screw feeding side of the second parts feeder 15, a rotating table 17 which is disposed in the screw feeding side of the linear feeder 16, and a plurality of inspection units (not shown) such as various transfer mechanisms and sensors which are arranged around the rotating table 17. The sensors, for example, are sensors for detecting the shank length of the screw a, the presence or absence of threads of the screw a, and detecting whether or not plating is performed well. The screw inspection device with the above structure works effectively. However, many problems must be solved. For example, the smooth transfer of the screw a from the linear feeder 16 to the rotating table 17 is not well accomplished. Futher, the transfer operations between other transfer mechanisms are not efficiently and smoothly accomplished. The rough transfer operation results in mechanical trouble. When the screw inspection device 13 breaks down, the operation thereof must be interrupted in order to repair a broken part, thus shortening the operation time. Further, in addition to the roller type sorter 10, the two parts feeders 14 and 15, the linear feeder 16, the rotating table 17 and the like are required, resulting in a complex structure with a high manufacturing cost. Further, every time the kind of screw changes, the roller type sorter must be adjusted, resulting in inconvenience.

A similar construction comprising a plurality of stations having photoelectric detectors is used in GB—A—1 604 842 to numerically determine from their measured values the shank diameter and the shank length of the screw blank. Accordingly sorting is brought about, however, not as to the thread or as to the finished screws. This device can be used in front of an automatic screw production meachine.

Inspection systems for multi station inspection apparatus are known from US—A—3 386 575 using position and inspecting photoelectric means in which in cooperation with an inspection processing unit provide for actuation of a pass/rejection mechanism.

A particular application to drills is shown and described in "Automatic High-speed Measuring Systems for Complex Products and Shapes" (by Sargrove; The Radio and Electronic Engineer, Vol. 27, No. 5, May 1964, pages 337—348).

The problem to which the present invention addresses itself is to provide a screw inspection device which automatically performs various desired inspections and sorting with a simple structure, low manufacturing cost and good operability.

This problem is solved by a screw inspection device, as claimed, having a plurality of sensors which are disposed along a single rectilinear transfer means whose side walls are formed of a uniform, transparent material, which sequentially by photoelectric means perform predetermined measurements on the screw which has been transferred to said rectilinear transfer path and which output a measurement signal which indicates measured results;

a plurality of timing signal transmitters each of which outputs a predetermined timing signal every time a screw reaches said sensors;

a comparator connected to each of said sensors, in which a predetermined tolerance is set and which receives the measurement signal and the timing signal, said comparator comparing the measurement signal and the tolerance in response to the timing signal so that a predetermined acceptance/non-acceptance signal is output from said comparator in dependence on whether the measurement signal is within or outside the tolerance;

a sorting signal generator for receiving output signals from said comparator and output signals from a timing signal transmitter and for outputting a signal for sorting the inspected screw;

a sorter for receiving said sorting signal to sort said transferred screw in dependence on whether it is non-defective or defective, said transfer means comprising a base on which said side walls are mounted and spring means for supporting said base from below and for reciprocating said base with vibrations so that said base may be inclined to be at a higher level at the downstream side in a direction of movement of the screw (a) and at a lower level at the upstream side thereof;

each said side wall comprising:

an intermediate elastic body made of an adhesive and which is mounted to upper sides of said side walls;

a relatively thin support body made of quenched ribbon steel and which is mounted on said intermediate elastic body; and

said parts feeder having a conical shaft type aligning/transfer device which has a pair of cooperating conical shafts so arranged as to define a transfer path of a substantially fixed gap therebetween so that upper surfaces at small diameter portions of the shafts are located at a lower level than upper surfaces at large diameter portions thereof, said small diameter portions extending above said transfer path of said transfer means, the gap of the said transfer path being smaller than a head diameter of a screw and greater than a diameter of a shank thereof, and said conical shafts being rotated such that circumferential surfaces thereof which oppose each other through the gap move upward, whereby the screws are sequentially aligned along said transfer path with the heads facing upward while the screws are moved toward said small diameter portions.

With the screw inspection device of the above structure, the sorting is not performed by the diameter of the head before transfer to the transfer path as described with reference to the conventional device. Therefore, the screw is fed only once from the parts feeder to the transfer means to be sorted. In the conventional device of Fig. 2, the screw is sequentially transferred four times through many machines, that is, from the first parts feeder 14 to the roller type sorter 10, from the roller type sorter 10 to the second parts feeder 15, from the second parts feeder 15 to the linear feeder 16, and from the linear feeder 16 to the rotating table 17, thus resulting in dropping and clogging. However, interruption of the device, according to the present invention, as a whole, due to clogging is reduced considerably.

The path on which the screw is transferred is extremely simple in construction as compared with the conventional device. Various sensors are disposed along the path as described above. Thus, various inspections and measurements are performed while the screw is being transferred so that a mechanism such as a rotating table for a special path need not be used. The screw inspection device according to the present invention is made simple and compact, resulting in low costs for the screw inspection device itself and in savings on installation and maintenance.

In a preferred embodiment of the screw inspection device according to the present invention, a vibration type transfer device is used as the transfer means which transfers a screw by causing it to jump. In this case, a intermediate viscoelastic body is fired to the upper surface of the feeder main body and a thin support body is fixed to the upper surface of the intermediate viscoelastic body, a screw is placed directly on the thin support body. The feeder main body performs a reciprocal movement with vibration in the oblique direction. In this manner, a screw which jumps to advance and is dropped on the thin support body, rests on the thin support body within a short period of time, so that the screw is measured while being transferred. Therefore, in the screw inspection device according to the present invention, a benefit such as easy and precise measurement is accomplished, thereby assuring a high inspection accuracy at high transfer speed.

Further, according to the screw inspection device of the preferred embodiment of the present invention, the roller type sorter and conical shaft type aligning/transferring device are used as the parts feeders. Thus, the screw is smoothly transferred from the roller type sorter to the conical shaft type aligning-transferring device and the screw is again smoothly transferred from the aligning/transfer device to the transfer means. Further, the diameter of the screw is checked in order to sort out the defective from the non-defective screws. In this case, the screw is securely transferred from the roller type sorter to the aligning/transferring device, as the screw which drops from the roller type sorter is received by a guide member which covers a wide field on the aligning/transfer. Further, the screw is smoothly transferred from the aligning/transfer device to the transfer means as the leading end of the transfer path extends above the transfer means which is formed between the conical shafts in the aligning/transfer device.

This screw inspection device is such that the height of side walls is so formed as to be greater than the length of a shank of a screw to be inspected. This arangement provides an advantage of damping the vibration of screws in a direction perpendicular to that of a transfer path whereby it is possible to prevent the mistiming of a timing signal as occurring due to the vibration of screws and thus to prevent lowering of an inspection accuracy.

In the preferred embodiment of this invention the side walls are made of a uniform, transparent material, providing the following advantages. That is, this specific arrangement obviates the necessity of performing any boring operation and thus can maintain the mechanical strength uniformly. Furthermore, no abnormal vibration occurs due to a variation in a vibration mode which may otherwise occur at a bored portion or section formed, assuring the transfer of screws in a stabilized state and thus preventing the mistiming of timing signals as well as a lowered inspection accuracy. Owing to the use of the transparent material for the side walls there is no inconvenience when as inspection is carried out with the use of light.

The parts feeder with above structure properly performs the operation for transferring the screws as compared with the conventional parts feeder.

This invention can be more fully understood from the following detailed description when taken in conjunction with the accompanying drawings, in which:

Fig. 1A and 1B are perspective views, from two different directions, of a conventional roller type sorter which is widely used for a conventional screw inspection device;

Fig. 2 shows the conventional screw inspection device which uses the roller type sorter of Fig. 1;

Fig. 3 is a perspective view of a screw inspection device according one embodiment of the present invention;

Fig. 4 is a view for explaining the principle of measurement of a shank length sensor of Fig. 3;

Figs. 5A and 5B are views for explaining the principle of measurement of a head diameter sensor of Fig. 3;

Figs. 6A and 6B are views for explaining the principle of detecting operation of a thread sensor of Fig. 3;

Fig. 7 is a block diagram, partially showing the screw inspection device of Fig. 3, for explaining the mode of operation which brings a screw from various sensors to a sorter;

Fig. 8 is a perspective view of an embodiment which uses a vibration type transfer means in place of the transfer means of Fig. 1;

Fig. 9 is a front view showing the structure of the vibration type transfer device of Fig. 8;

Fig. 10 is a view for explaining the mode of operation of the device of Fig. 8;

Fig. 10A is a view for explaining the mode of operation in which a screw is transferred in accordance with the mode of operation of Fig. 10;

Fig. 11 is a perspective view of an embodiment in which a conical shaft type aligning/transfer device is used in place of the parts feeder shown in Fig. 3; and

Fig. 12 is a perspective view of a screw inspection device according to another embodiment of the present invention.

A screw inspection device according to one embodiment of the present invention will be described with reference to Figs. 3 to 7. A parts feeder 20 which is used for a screw inspection device of Fig. 3 is the same as the parts feeder which is conventionally used. Screws *a*, the heads of which face upward, are sequentially fed and transferred to a transfer means 21. The transfer means 21 has a pair of side walls 23 which stand upright from a base to be higher than the length of the screw *a* and which oppose each other substantially parallel to each other with a groove 22 defined therebetween. The groove 22 has a width which is less than the diameter of the head of the screw *a* and which is greater than the diameter at the shank of the screw *a*. The screws *a*, fed from the parts feeder 20, are sequentially transferred downstream (to the left in Fig. 3) such that the heads thereof face upward and the shanks thereof extend therefrom within the groove 22. In order to transfer screws *a* in this manner, many measures may be taken. For example, the side walls 23 may be slightly inclined from the upstream side to the downstream side. A vibrator 23a may be mounted to the side walls 23 to provide vibrations to the side walls 23. Other suitable means may be used to obtain the same results.

As described hereinabove, screws *a* are sequentially transferred along a transfer path 24 defined by the groove 22 of the transfer means 21. Therefore, if a desired number of inspection stages, three in the figure, 25, 26 and 27, are arranged along the transfer path 24, the screws *a* may receive required inspections while they are being transferred by the transfer means 21. Every time screw *a* reaches the respective inspection stages 25, 26 and 27 during transfer, a predetermined timing signal is generated from a timing signal transmitter 28 which is incorporated for each inspection stage. The timing signal transmitter 28 may comprise a light-emitting element (not shown) which emits light toward the screw *a* and a light-receiving element for receiving light reflected by the screw *a* to generate the predetermined timing signal. Alternatively, the timing signal transmitter 28 may utilize emitted light in place of the reflected light which is interrupted by the screw. Furthermore, the timing signal transmitter 28 may utilize other suitable, known principles.

The inspection items of the screws *a* assigned to the respective inspection stages 25, 26 and 27 may be selected according to the purpose of inspection. For example, the inspection stage 25 has a shank length sensor 30 which generates a signal representing the shank length of the screw *a*. The shank length sensor 30 has a light emitting element 32 and a light-receiving element 33. The light-emitting element 32 and the light-receiving element 33 are arranged so as to communicate with each other through hole 31 in the side walls 23 or by the light penetration through the side walls. The screws *a* are supported at the upper ends of the side walls 23 such that the shanks thereof extend in the groove 22 defined between the side walls 23. The light-receiving element 33 comprises a plurality of photodiodes which are arranged at a predetermined pitch parallel to the shanks of the screws *a*. A signal corresponding to the number of photodiodes which did not receive light due to the presence of the screws *a* is generated by the light-receiving element 33. Therefore, if the distance between the light-receiving element 33 from the tops of the side walls 23 is correctly set in advance, the shank length of the screw *a* can be calculated from the results obtained from the shank length sensor 30. In comparison with an analog-type sensor which is widely used for conventional screw inspection devices, which generates an electric signal representing the amount of light blocked by the screw, the light-receiving element 30 of the present invention is less subject to adverse effects of changes in environmental factors, and measurements of the shank length may be performed with high precision and reliability. Instead of forming through holes 31, it is also possible to prepare the side walls 23 from a transparent material.

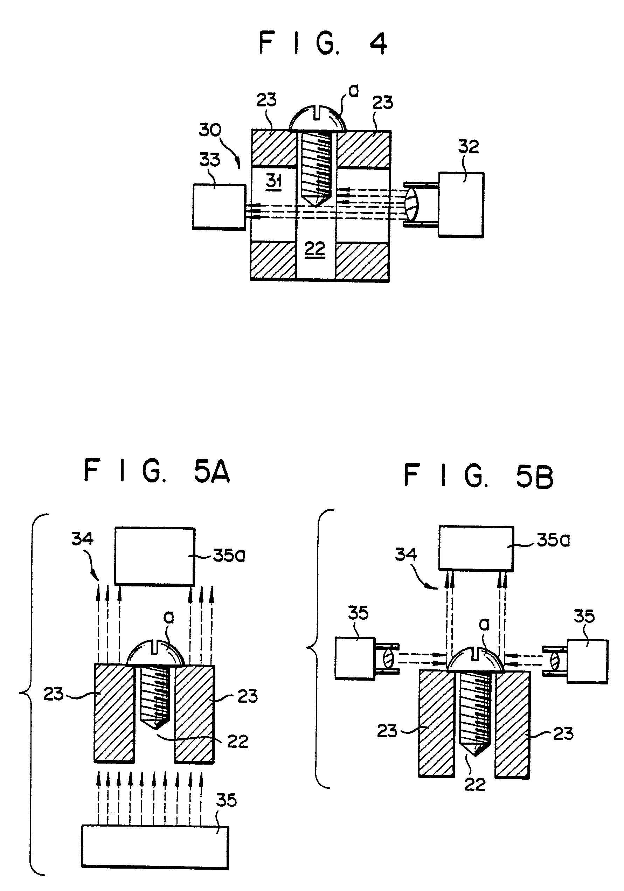

The inspection stage 26 shown in Fig. 3 has, in this embodiment, a head diameter sensor 34 which measures the diameter of the head of the screw *a*. As shown in Fig. 5A, the side walls 23 which oppose each other are made of a transparent material, and have a light-emitting element 35 and a light-receiving element 35a which oppose each other above and below the side walls 23. The light-receiving element 35a has a plurality of photodiodes which are arranged at a predetermined pitch in a two-dimensional manner. The photodiodes which do not receive light from the light-emitting element 35 due to the presence of the head of the screw *a* do not generate output signals. Therefore, the output signals from the photodiodes are sequentially scanned in a predetermined direction to obtain output signals of an array of photodiodes corresponding to the maximum number of zero outputs. In this manner, the diameter of the head of the screw may be calculated from these output signals. Fig. 5B shows a head diameter sensor 34 of a type different from that shown in Fig. 5A. In this case, the light emitted by the light-emitting elements 35 which are arranged at both sides of the head of the screw *a* illuminates both sides of the head of the screw *a*, and the light reflected from the head of the screw *a* is received at the light-receiving element 35a. The light-receiving element 35a has a plurality of photodiodes which are arranged at a predetermined pitch in a two-dimensional manner. The light reflected by the head of the screw *a* becomes incident on these photodiodes, and the diameter of the head of the screw *a* is calculated from the output distribution of the photodiodes. Depending upon the shape of the head of the screw *a*, the light-emitting element and the light-receiving element as in the shank length sensor 30 described with reference to Fig. 4 may be used. In this case, the light is radiated on the head of the screw *a* along the surfaces of the side walls 23, and the photodiodes of the light-receiving element do not receive the light reflected by the head of the screw in a pattern when it is viewed perpendicularly to the shaft of the screw. Therefore, the diameter of the head, which is the longest distance along the horizontal line of the shadow pattern may be obtained from the output distribution of the photodiodes in the similar manner as in the case of the shank length.

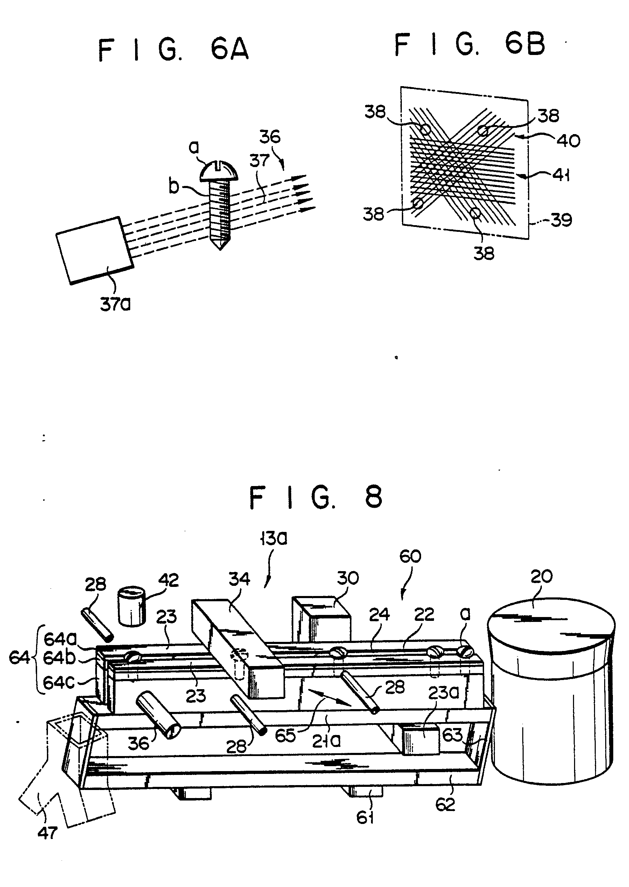

A thread sensor 36 for sensing the threaded condition of the screw *a* is arranged in the inspection stage 27 in the embodiment shown in Fig. 3. The thread sensor 36 has, as shown in Fig. 6A, a laser-device which radiates a laser beam 37 which circumscribes a threaded portion b of the screw *a*, and a light-receiving element 38 for receiving the laser beam which is diffracted by the threaded portion b. The laser beam 37 is projected on a screen 39. If threads are not formed at the portion b, a diffraction image 41 of the light diffracted by the portion b includes a number of parallel lines which extend substantially perpendicularly to the shaft of the screw. However, if the threads are formed at the portion b, a diffraction image 40 is determined by the lead angle of the threads and includes parallel lines which extend in a direction different from that of the diffraction image 41. In order to distinguish between these two diffraction images, the light-receiving element 38 is arranged at a position outside the diffraction image 41 and within the diffraction image 40. Then, by detecting the output signal from the light-receiving element 38, the presence or absence of the threaded portion b may be detected. In comparison with the conventional method, that is, the analog method according to which the light is projected on the threaded portion b and the intensity of reflected light is converted into an electric signal to detect the presence or absence of the threaded portion b, the arrangement of the embodiment of the present invention is advantageous in that the thread sensor 36 need not be adjusted according to the condition of the threaded portion and the detection of the threaded portion may be performed with high reliability. A plating sensor 42 for discriminating the quality of plating of the screw a is also arranged at the inspection stage 27 in addition to the thread sensor 36. The plating sensor 42 generates a signal representing the intensity of the laser beam reflected by the screw a. The presence or absence of plating, or the quality of the plating of the screw a may be discriminated by comparing the signal representing the intensity of the reflected light with a predetermined tolerance.

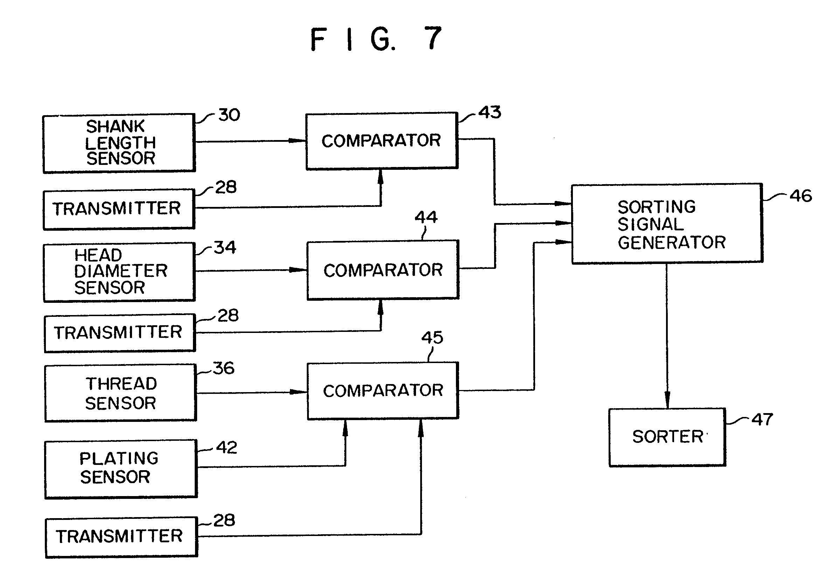

The four kinds of sensors 30, 34, 36 and 42 described above are connected, as shown in the block diagram in Fig. 7, to first, second and third comparators 43, 44 and 45, together with the timing signal transmitter 28 which are incorporated for the respective sensors. The outputs from the comparators 43, 44 and 45 are supplied to a sorting signal generator 46, the output of which is supplied to a sorter 47.

A reference value of the shank length of the screw a, and the tolerance, that is, the allowable error, are preset in the first comparator 43 in advance. In response to a timing signal supplied from the associated timing signal transmitter 28, the first comparator 43 starts operating to compare the signal representing the measurement obtained from the shank length sensor 30 with the tolerance. When the data of measurement falls within the tolerance, the first comparator 43 generates a predetermined acceptance signal.

The tolerance of the diameter of the head of the screw a is preset in the second comparator 44 in advance. In response to a timing signal supplied from the associated timing signal transmitter 28, the second comparator 44 compares the signal representing the measurement obtained by the head diameter sensor 34 with the tolerance. As a result of the comparison, if the measurement falls within the tolerance, the second comparator 44 generates a predetermined acceptance signal.

The tolerance of the plating degree of the screw a is preset in the third comparator 45. In response to a timing signal supplied from the associated timing signal transmitter 28, the third comparator 45 starts operating to compare the signal representing the measurement with the tolerance. When the measurement falls within the tolerance, the third comparator 45 generates a predetermined acceptance signal. The sorting signal generator 46 counts, each time the screw a is sequentially transferred past the inspection stages (25, 26, 27), timing signals sent from the timing signal generator 28 of the respective stages with respect to the screw a inspected, and counts non-defective signals sent from the comparators (43, 44, 45) for the respective stages. The generator 46 produces an acceptance signal when a sum of the timing signals coincides with a number of all inspection stages with respect to the screw a and when the number of said non-defective signals coincides with the number of all the inspection stages, and produces a sorting signal representative of the non-acceptance when non-coincidence signal is obtained.

The sorter 47 has an inlet port 48 for receiving, as shown in Fig. 3, the screw a which is transferred from the transfer path 24, a switching means (not shown) operative in response to the sorting signal from the sorting signal generator 46, a non-defective screw deliver path 49 and a defective screw exhaust path 50 which communicate with the inlet port 48. When the sorting signal is supplied to the switching means from the sorting signal generator 46, the switching means operates. Then the non-defective screws among the screws a introduced through the inlet port 48 are transferred to a predetermined location through the non-defective screw deliver path 49, and the defective screw is transferred to a predetermined location through the defective screw exhaust path 50.

According to the arrangement described above, the screws a are subjected to predetermined inspections at the inspection stages 25, 26 and 27 while they are sequentially transferred along the transfer path 24 defined by the groove 22 and a pair of side walls 23. Therefore, the screw inspection device of the present invention is significantly simple in construction as compared with the conventional device 13 as shown in Fig. 2. The screw inspection device of the present invention has various advantages. For example, it is necessary to provide one parts feeder 20 for sequentially feeding screws with their shanks kept down. The roller type sorter 10 or the rotating table 17 as shown in Fig. 2 are not required. The cost of the overall device may be significantly reduced. Handling and maintenance of the device is easy.

The embodiment described above is only an example, and various other modifications and changes may be made within the scope of the present invention. For example, the number of inspection stages, the kinds of items to be inspected at the respective inspection stages, the arrangement and order of the inspection stages, and the sensing principle of the respective sensors may be changed. Furthermore, if needed, the transfer path 24 may be curved instead of straight. The arrangement of the parts feeder 20, the sorter 47 and so on, or whether or not to incorporate them at all may be changed according to the type of inspection required.

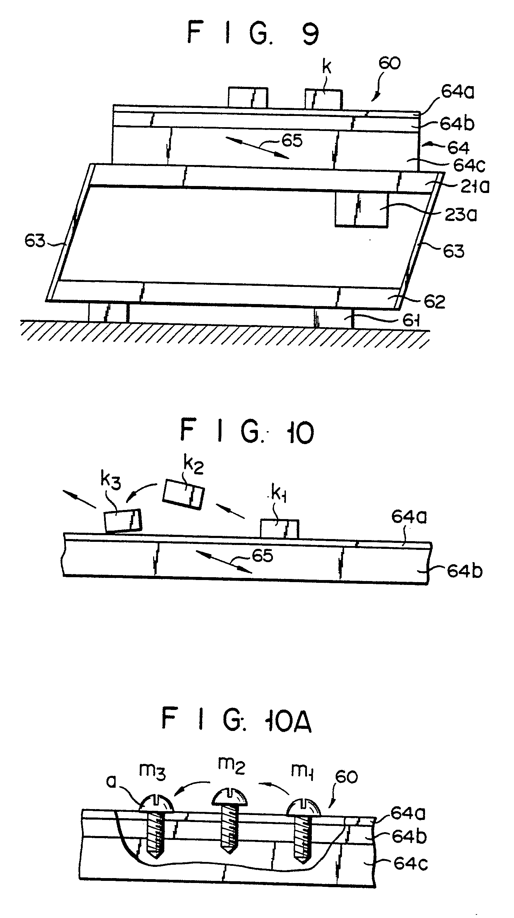

Fig. 8 shows a screw inspection device 13a which uses a vibration type transfer device 60 which is different from that shown in Fig. 3. In the transfer device 60, a feeder main body 64 is supported through leaf springs 63 on a base body 62 which is fixed to legs 61 placed on the floor. The feeder main body 64 consists of a thin support body 64a, an intermediate viscoelastic body 64b, and a base body 64c. The lower end of the base table 21a mounting the feeder main body 64 is fixed through leaf springs 63 to the base body 62. Therefore, when the leaf springs 63 are mounted to the base body 62 to be inclined to the right as shown in Fig. 8, and the vibrator 23a provides vibrations to the feeder main body 64, the feeder main body 64 is vibrated and moved as indicated by an arrow 65 so that it is higher toward the left and lower toward the right. Since the amplitude of the vibration of the feeder main body 64 is relatively small, the vibrations may be regarded as reciprocal linear vibrations along the direction indicated by the arrow 65. The thin support body 64a is usually made of a material which has abrasion resistance and suitable elasticity and which allows sliding movement thereon, such as quenched ribbon steel. If desired, the thin support body 64a may be made of a non-metallic material depending upon the operating conditions. The intermediate viscoelastic body 64b may be made of a soft material having a shock absorbing characteristic, such as rubber or foamed material. In special cases, the intermediate viscoelastic body 64b may be an adhesive material which bonds the thin support body 64a and the base body 64c.

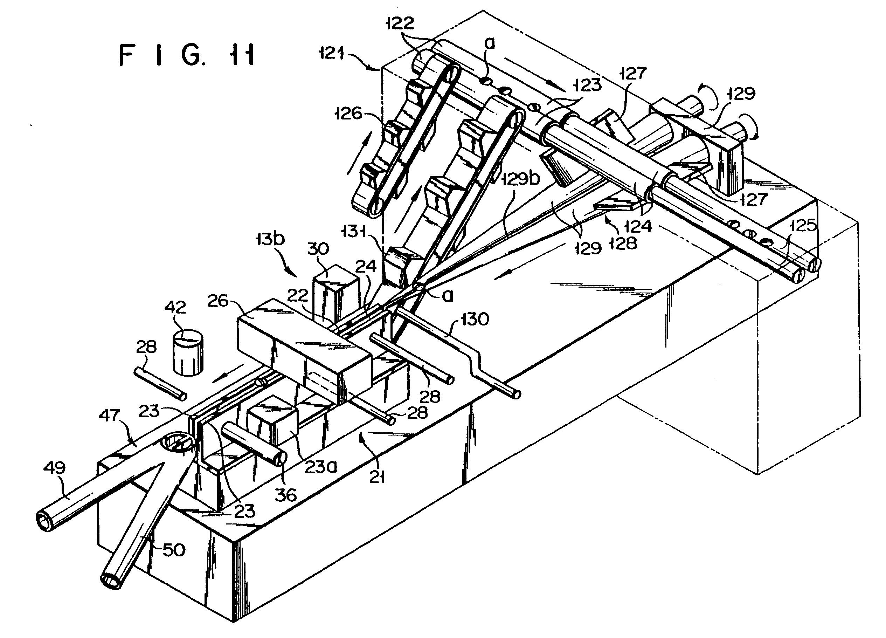

The principle of displacement of the screw to the left will be explained with reference to Figs. 9 and 10 when the feeder main body 64 reciprocates with vibrations in the direction indicated by the arrow 65. Fig. 9 is an enlarged view of the vibration type transfer device 60 alone. In these figures, a rectangular parallelepiped k is drawn in place of a screw a. When the feeder main body 64 is driven in the direction indicated by the arrow 65, the rectangular parallelepiped k jumps from the position indicated by k1 in the figure to the position indicated by k3 through the position indicated by k2. Therefore, if the vibrations are provided continuously, even if the upper surface of the feeder main body 64 is substantially horizontal, the rectangular parallelepiped k sequentially moves to the left. The displacement of the rectangular parallelepiped k as described above is performed by the jump of the rectangular parallelepiped k. However, when the rectangular parallelepiped k reaches the feeder main body 64, the rectangular parallelepiped k does not receive the forward force but the force in the opposite direction. Therefore, it is preferable that the impact which the rectangular parallelepiped k may receive when it reaches the feeder main body 64 may be reduced, so that the rectangular parallelepiped k may settle quickly and the inspection may be completed quickly. In the case wherein the screw a is inspected while it is being transferred as in Fig. 8, the screw a jumps from the position at which its shank extends into the groove 22 and its head is supported by the thin support body 64a to the upper left position. Thus, the screw a moves to the left and drops on the feeder main body 64 such that the reaction is suppressed by the thin support body 64a and the intermediate viscoelastic body 64b. The movement of the screw a is schematically shown in Fig. 10A. Referring to Fig. 10A, the screw jumps from m1 to m2, and from m2 to m3, that is, it moves to the left because of the vibrations. The pitch of the screw is shown as emphasized with respect to the height of the jump of the screw. Therefore the screw a is settled on the feeder main body 64 quickly, so that the various inspections as described above may be performed during this settling period.

In the screw inspection device shown in Fig. 8, the vibration type transfer device 60 is used, so that the reaction generated when the screw a reaches the feeder main body 64 is significantly suppressed by the intermediate viscoelastic body 64b and thin support body 64a. Therefore, it becomes possible to vibrate the feeder main body 64 stronger than with the conventional screw inspection device which does not use the members 64a and 64b, so that the reliable transfer and rapid and reliable inspection of the screw may be guaranteed.

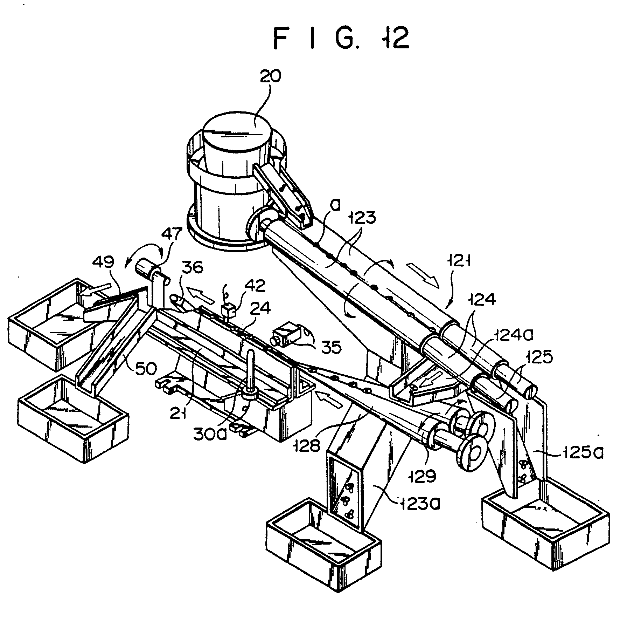

The screw inspection device described above shown in Fig. 3 uses the parts feeder 20 of the known type. However, a screw inspection device 13b shown in Fig. 11 has a roller type sorter 121 and a conical shaft type aligning/transfer device 128 in place of the parts feeder 20. In this device, the screw a moves on the roller type sorter 121 while the head diameter thereof is inspected. The screw a whose head diameter falls within the tolerance is guided to the conical shaft type aligning/transfer device 128, then to the transfer means 21 which is described with reference to Fig. 3, and to the left of the figure. The details of the movement of the screw a will now be described.

The roller type sorter 121 has a pair of parallel rollers 122 which have central axes extending parallel to each other and which rotate so that their opposing surfaces move upward. The parallel rollers 122 are inclined so that their left ends are at the upper level and their right ends are at the lower level. The parallel roller 122 has a large diameter portion 123 which is located at the leftmost position of the figure, a small diameter portion 125 which is located at the rightmost position of the figure, and an intermediate diameter portion 124 which is interposed between these two portions. Among the screws a supplied, those whose head diameters are within the predetermined tolerance drop through a gap defined between the adjacent intermediate diameter portions 124. The screws *a* whose head diameters are smaller than the tolerance drop through a gap defined between the adjacent large diameter portions 123. The screws *a* whose head diameters are larger than the tolerance drop through a gap defined between adjacent small diameter portions 125. Therefore, the screws *a* which are supplied to the large diameter portions 123 are sequentially displaced to the small diameter portions 125, and the screws *a* whose head diameters are within the tolerance alone (to be referred to screws of correct head diameter hereinafter) drop through the space defined between the intermediate diameter portions 124. The screws *a* sorted in this manner are collected by a pair of guide members 127 and are supplied on the conical shaft type aligning/transfer device 128. The conical shaft aligning/transfer device 128 has two conical shafts 129 which are supported by bearing means 129. The two conical shafts 129 are arranged adjacent to each other, defining a gap, that is, a transfer path 129b of a predetermined width therebetween. The conical shafts 129 are inclined such that the vertex sides are at the lower level and the sides for receiving the screws *a* are at the higher level. The conical shafts 129 are so positioned that the width of the gap, that is, the transfer path 129b is greater than the diameter of the threaded portion of the screw supplied on these conical shafts and is smaller than the head diameter. The conical shafts 129 are rotated in the opposite directions so that the circumferential surfaces thereof move upward with the gap therebetween. Therefore, the screws *a* which drop through the gap between the intermediate diameter portion 124 of the parallel rollers 120 are sequentially moved along this transfer path 129b as their shanks depend in the transfer path 129b and their heads supported above the transfer path 129b. These screws *a* are then supplied from the left ends of the conical shafts 129 to the transfer means 21. As has been described with reference to Fig. 3, the screws *a* are displaced while they are subjected to inspection and are automatically classified into defective and nondefective screws.

The compressed air is blown from a nozzle 130 which is arranged in the vicinity of the front ends of the conical shafts 129. When the screw *a* which drops on the conical shafts 129 cannot be aligned along the gap, that is, the transfer path 129b, and is placed on the aligned screw *a*, the misaligned screw *a* is blown away by the compressed air and is supplied to a bucket conveyor 131 which is located next to the conical shafts 129. Thereafter, this screw *a* is supplied on the large diameter portions of the parallel rollers 122. Another bucket conveyor 126 is arranged substantially parallel to the bucket conveyor 131. The screw *a* which has been manufactured and supplied to the screw inspection device is supplied on the large diameter portions 122 by this bucket conveyor 126. For the sake of simplicity, only part of the bucket conveyor 126 is shown in the figure.

Fig. 12 shows a screw inspection device similar to that shown in Fig. 11. The three-dimensional structure of the screw inspection device may be more clearly understood from Fig. 12. Fig. 12 only shows those parts which are directly related to inspection of the screws, and the housing and frames for supporting these parts are omitted. In this screw inspection device, the screw *a* is supplied to the roller type sorter 121 through the parts feeder 20. Among the screws *a* thus supplied, the screws *a* which drop through the gap between the large diameter portions 123 and through the gap between the small diameter portions 125 are supplied to containers through shoots 123a and 125a, respectively. The screws *a* which drop through the gap between the intermediate portions 124 are supplied to the conical shaft type aligning/transfer device 128 through a shoot 124a. These screws *a* are displaced while being aligned between the conical shafts 129, and supplied to the the transfer means 21. After the transfer path 24, these screws *a* are sorted by the sorter 47 and supplied to containers through a non-defective screw exhaust path 49 and a defective screw exhaust path 50, respectively. The various sensors are arranged along the transfer path 24 as in other embodiments. Referring to Fig. 12, reference numeral 35 denotes a shank length measuring camera, 30b denotes light required for photography by the camera 35, 42 denotes a plating sensor, and 36 denotes a thread sensor. In the case of this embodiment, the head diameter of the screw is sensed by the roller type sorter.

**Claim**

A screw inspection device having:

a parts feeder (20) which supplies a screw (a) with its shank kept down;

a transfer means (21) having a pair of side walls (23) arranged substantially parallel to each other to define a transfer path groove (22) along which the screw (a) supplied from said parts feeder is transferred with its head facing upwards, the height of said walls (23) being formed to be greater than the length of the shank of the screw (a); and

a plurality of gauging means arranged along the transfer means which perform sorting for specific dimensions of the screw,

characterised by

a plurality of sensors (30, 34, 36, 42) which are disposed along a single rectilinear transfer path whose side walls (23) are formed of a uniform, transparent material, which sensors sequentially by photoelectric means perform predetermined measurements for the screw (a) which has been transferred to said rectilinear transfer path (24) and which output a measurement signal which indicates measured results;

a plurality of timing signal transmitters (28) each of which outputs a predetermined timing signal every time a screw (a) reaches said sensors (30, 34, 36, 42); and

a comparator (43, 44, 45) connected to each of said sensors (30, 34, 36, 42), in which a predetermined tolerance is set and which receives the measurement signal and the timing signal, said comparator (43, 44 45) in response to the timing signal determining whether the measurement signal is within the tolerance so that a predetermined acceptance/non-acceptance signal is output from said comparator (43, 44, 45) in dependence on whether the measurement signal is within or outside the tolerance;

a sorting signal generator (46) for receiving output signals from said comparator (43, 44, 45) and output signals from a timing signal transmitter (28, 28, 28, 28) and for outputting a signal for sorting the inspected screw (a); and

a sorter for receiving said sorting signal to sort said transferred screw (a) in dependence on whether it is non-defective or defective,

said transfer means (21) comprising a base (21a) on which said side walls (23) are mounted, and spring means (63) for supporting said base (21a) from below and for reciprocating said base (21a) with vibrations so that said base (21a) may be inclined to be at a higher level at the downstream side in a direction of movement of the screw (a) and at a lower level at the upstream side thereof;

each said side wall (23) comprising:

an intermediate elastic body (64b) made of an adhesive and which is mounted to upper sides of said side walls (23);

a relatively thin support body (64a) made of quenched ribbon steel and which is mounted on said intermediate elastic body (64b); and

said parts feeder (20) having a conical shaft type aligning/transfer device which has a pair of cooperating conical shafts (129) so arranged as to define a transfer path (129b) of a substantially fixed gap therebetween so that upper surfaces at small diameter portions of the shafts are located at a lower level than upper surfaces at large diameter portions thereof, said small diameter portions extending above said transfer path (24) of said transfer means (21), the gap of said transfer path (24) being smaller than a head diameter of a screw and greater than a diameter of a shank thereof, and said conical shafts (129) being rotated such that circumferential surfaces thereof which oppose each other through the gap move upward, whereby the screws are sequentially aligned along said transfer path (129b) with the heads facing upward while the screws are moved toward said small diameter portions.

**Patentanspruch**

Schraubeninspektionsgerät mit

einem Teileförderer (20), der eine Schraube (9) mit nach unten weisendem Schaft zuführt;

einer Überführungseinrichtung (21) mit einem Paar von Seitenwandungen (23), die im wesentlichen parallel zueinander angeordnet sind und eine Überführungswegnut (22) bilden, längs der die vom Teileförderer angelieferte Schraube (a) gefördert wird, wobei der Kopf nach oben weist und die Höhe der Wandungen (23) höher als die Länge des Schafts der Schraube (a) ausgebildet sind;

und eine Vielzahl von Meßlehreneinrichtungen, die längs über Führungseinrichtungen angeordnet sind, die für das Sortieren der Schraube nach spezifischen Abmessungen sorgen,

gekennzeichnet durch

eine Vielzahl von Sensoren (30, 34, 36, 42), die längs eines einzigen geradlinigen Überführungsweges angeordnet sind, dessen Seitenwandungen (23) aus gleichförmigem transparentem Material gebildet sind, wobei diese Sensoren necheinander vermittels fotoelektrischer Einrichtungen vorbestimmte Messungen für die Schraube (a) vornehmen, die auf diesen geradlinigen Überführungsweg (24) überführt wurden und die ein Meßsignal ausgeben, welches die gemessenen Ergebnisse anzeigt;

eine Vielzahl von Zeitgebersignalübertragern (28), von denen ein jeder ein vorbestimmtes Zeitgebersignal zu jedem Zeitpunkt ausgibt, indem eine Schraube (a) diese Sensoren (30, 34, 36, 42) erreicht; und

einen Komparator (43, 44, 45), der mit jedem dieser Sensoren (30, 34, 36, 42) verbunden ist, bei dem eine vorbestimmte Toleranz eingestellt wird und der das Meßsignal und das Zeitgebersignal empfängt, wobei dieser Komparator (43, 44, 45) in Abhängigkeit vom Zeitgebersignal feststellt, ob das Meßsignal sich innerhalb der Toleranzgrenze befindet, so daß ein vorbestimmtes Akzeptanz/Nicht-Akzeptanzsignal von diesem Komparator (43, 44, 45) abhängig davon ausgegeben wird, ob das Meßsignal innerhalb oder außerhalb der Toleranz sich befindet;

einen Sortiersignalgenerator (46), der Ausgangssignale von diesem Komparator (43, 44, 45) und Ausgangssignale von einem Zeitgebersignaltransmitter (28, 28, 28, 28) empfängt und zur Ausgabe eines Signals zum Sortieren der inspizierten Schraube (a) und einem Sortierer zum Empfang dieses Sortiersignals zum Sortieren dieser überführten Schraube (a), abhängig davon, ob diese nicht-fehlerhaft oder fehlerhaft ist, wobei diese Überführungseinrichtungen (21) eine Basis (21a) umfassen, auf diese Seitenwandungen (23) gelagert sind sowie Federeinrichtungen (63) zum Abstützen dieser Basis (21a) von unten und zur Hin- und Herbewegung dieser Basis (21a) vermittels Vibrationen, so daß diese Basis (21a) so geneigt werden kann, daß sie sich auf einem höheren Niveau an der Abstromseite in eine Bewegungsrichtung der Schraube (a) und auf einem niedrigeren Niveau an deren Anströmseite befindet, wobei jede dieser Seitenwandungen (23) umfaßt:

einen elastischen Zwischenkörper (64b) aus einem Klebstoff oder Adhäsivmittel und der an den oberen Seiten dieser Seitenwandungen (23) gelagert ist;

einen relativ dünnen Trägerkörper (64a) aus abgeschrecktem Bandstahl und der auf diesem elastischen Zwischenkörper (64b) gelagert ist; und

dieser Teileförderer (20) eine konische wellenartige Ausricht/Überführungseinrichtung aufweist, die über ein Paar von kompensierenden konischen Wellen (129) verfügt, die so angeordnet sind, daß sie einem Überführungsweg (129b) eines im wesentlichen festen Spaltes hierzwischen bilden, so daß die Oberseiten an den Teilen kleiner Durchmesser der Wellen auf einem Niveau positioniert sind, das niedriger als die Oberseiten an den großen Durchmesserteilen hiervon ist, wobei diese Bereiche kleinen Durchmessers sich oberhalb des Überführungsweges (24) dieser Überführungseinrichtungen (21) befinden, wobei der Spalt dieses Überführungsweges (24) kleiner als ein Kopfdurchmesser einer Schraube und größer als ein Durchmesser eines Schaftes hiervon ist und diese konischen Wellen (129) derart in Drehung versetzt werden, daß Umfangsflächen hiervon, die einander im Spalt gegenüber liegen, sich nach oben bewegen, wodurch die Schrauben nacheinander längs dieses Überführungsweges (129b) ausgerichtet werden, wobei die Köpfe nach oben weisen, während die Schrauben gegen diese kleinen Durchmesserbereiche bewegt werden.

## Revendication

Dispositif d'inspection de vis comportant:

un dispositif (20) d'alimentation en pièces qui transmet une vis (a) avec sa tige maintenue vers le bas,

un dispositif (21) de transfert ayant deux parois latérales (23) qui sont sensibles parallèles l'une à l'autre afin qu'elles délimitent une gorge (22) formant un trajet de transfert le long duquel la vis (a) transmise par le dispositif d'alimentation en pièces est transférée avec sa tête tournée vers le haut, la hauteur des parois (23) étant supérieure à la longueur de la tige de la vis (a), et

plusieurs dispositifs de calibrage placés le long du dispositif de transfert et assurant le tri en fonction de dimensions particulières de la vis,

caractérisé par

plusieurs capteurs (30, 34, 36, 42) qui sont disposés le long d'un seul trajet rectiligne de transfert dont les parois latérales (23) sont formées d'un matériau transparent et uniforme, les capteurs effectuant successivement, à l'aide de dispositifs photoélectriques, des mesures prédéterminées sur la vis (a) qui a été transférée au trajet (24) rectiligne de transfert et transmettant un signal de mesure qui indique les résultats mesurés,

plusieurs émetteurs (28) de signaux de synchronisation qui transmettent chacun un signal prédéterminé de synchronisation chaque fois qu'une vis (a) atteint les capteurs (30, 34, 36, 42), et

un comparateur (43, 44, 45) connecté à chacun des capteurs (30, 34, 36, 42), dans lequel une tolérance prédéterminée est fixée et qui reçoit le signal de mesure et le signal de synchronisation, le comparateur (43, 44, 45), à la suite du signal de synchronisation, déterminant si le signal de mesure satisfait à la tolérance afin qu'un signal prédéterminé d'acceptation- non acceptation soit transmis par le comparateur (43, 44, 45) en fonction du fait que le signal de mesure satisfait à la tolérance ou non,

un générateur (46) de signaux de tri destiné à recevoir les signaux de sortie du comparateur (43, 44, 45) et des signaux de sortie d'un émetteur de signaux de synchronisation (28, 28, 28, 28) et à transmettre un signal de tri de la vis inspectée (a), et

un organe de tri destiné à recevoir le signal de tri afin qu'il trie la vis transférée (a) en fonction du fait qu'elle est défectueuse ou non,

le dispositif de transfert (21) comprenant une base (21a) sur laquelle sont montés les parois latérales (23) et un dispositif à ressort (63) destiné à supporter la base (21a) par-dessous et à provoquer des déplacements alternatifs de la base (21a) à l'aide de vibrations afin que la base (21a) puisse s'incliner avec un niveau élevé en aval dans la direction de déplacement de la vis (a) et un niveau plus faible en amont,

chaque paroi latérale (23) comprenant:

un corps élastique intermédiaire (64b) formé d'un adhésif et qui est monté sur les faces supérieures des parois latérales (23),

un corps relativement mince de support (64a) formé d'un ruban d'acier trempé et qui est monté sur le corps élastique intermédiaire (64b), et

le dispositif (20) d'alimentation en pièces ayant un dispositif d'alignement et de transfert du type à arbres coniques comporte deux arbres coniques coopérants (129) disposés de manière qu'ils délimitent un trajet de transfert (129b) ayant un espace sensiblement fixe entre eux si bien que les surfaces supérieures de parties de petit diamètre des arbres se trouvent à un niveau inférieur à celui des surfaces supérieures de leurs parties de grand diamètre, les parties de petit diamètre étant disposées au-desses du trajet (24) de transfert du dispositif de transfert (21), l'espace formé par le trajet de transfert (24) étant inférieur au diamètre de la tête d'une vis et supérieur au diamètre de sa tige, et les arbres coniques (129) étant entraînés en rotation de manière que leurs surfaces circonférentielles qui sont en regard au niveau dudit espace remontent, si bien que les vis sont alignées successivement le long du trajet de transfert (129b) avec leurs têtes tournées vers le haut pendant que les vis se déplacent vers les parties de petit diamètre.

F I G. 1A

F I G. 1B

F I G. 2

F I G. 3

# F I G. 4

# F I G. 5A

# F I G. 5B

# F I G. 6A

# F I G. 6B

# F I G. 8

F I G. 7

# F I G. 9

# F I G. 10

# F I G. 10A

F I G. 11

# F I G. 12